# EUROPEAN PATENT APPLICATION

(11) **EP 1 418 512 A2**
(43) Date of publication of application: **12.05.2004**
(21) Application number: 03300133.0
(22) Date of filing: 30.09.2003
(51) Int. Cl.: G06F 17/30, H04L 29/06

(54) **Methods and apparatus for centralized provisioning of multi-domain Web content**

(30) Priority: 30.09.2002 US 259591
(71) Applicant: Alcatel Canada Inc., Kanata, Ontario K2K 2E6 (CA)
(72) Inventor: Jan, Salman Jaffer, Kanata, Ontario K2W 1E7 (CA); McNeely, Jason, Kanata, Ontario K2T 1C9 (CA)
(74) Representative: Feray, Valérie

(57) **Abstract**

Methods and apparatus for serving web content pertaining to multiple domains from a single web application server are presented. Web content is consolidated in, and region specific web content is served from, a central information store. The solution provides a determination as to which region a particular web content request pertains to. Based on the determination, region specific web content is selected from the consolidated web content and served. Users benefit from a region specific look, feel, and served content. Service providers benefit from centralized service provisioning at reduced provisioning overheads and reduced provisioning costs.

## Description

The invention relates to serving web content, and in particular to methods and apparatus for centralized provisioning of multi-domain web content.

Web-based dissemination of information has and continues to represent a key mode of communication. Despite enjoying a great deal of recent development, web service provisioning is still relatively new technology. Benefits of web-based information provisioning stem from a 24/7 availability of the information content, an extensive amount of provisioned information, fast access to information, etc. Decentralized entities such as: government departments, multinational organizations, chain-store retailers, franchises, etc. have turned to web-based provisioning of information to constituents, members, consumers, etc. respectively - collectively referred to as users of web services. The information may generally be divided into region specific web content. It is also common to provide information regarding the overall corporate entity associated with the web service.

The need for web-based content delivery has increased along with developments in data transport technologies as well with the growth of the installed data transport infrastructure.

Initially data service provisioning was localized because long-haul data transport was limited, slow, and expensive. Therefore the data transport infrastructure was concentrated and lent itself to forming domains. Web content pertaining to each domain was served to users from a corresponding regional web server and perhaps an associated application server. The reason for the use of web servers in combination with application servers is described elsewhere and has significance herein only in separating the receipt of Universal Resource Locator (URL) requests from the processing thereof without limiting the invention.

Typically, selected web content to be served to users transcends at least a subset of the regions while some content is regional in nature. Prior practice led to the replication of served content over many regional web servers. Mirror sites have been used to serve the same information from many points-of-presence with the view to reduce long-haul transport of the content served. These solutions are not without problems and in particular suffer from a need to manage the distribution of the web content. It is relatively easy to synchronize mirrored web content as all information served transcends all regions. However, the management of region specific content introduces high operational overheads. To some extent the high levels of operational overheads have been offset recently by cost reductions in long-haul data transport.

The regulation and standardization of communications services, including data transport services, have led to the growth of the domains typically to government boundaries (municipal, state, etc.) and as well to geographical boundaries (island, continent, etc.) At the same time, long-haul data transport technologies have enjoyed an explosive advancement, and the long-haul transport infrastructure has interlinked the world. The scales have tipped. Long-haul data transport cheap. The complexity of web services has increased as have the associated operational overheads. The offsets enjoyed between long-haul data transport costs and web service provisioning operational overheads no longer justify decentralized provisioning of web services. While web service provisioning costs point to centralized web service provisioning, the need for regionalized web content has not diminished.

In accordance with current practice in the art, regional web service provisioning infrastructure, such as multiple regional application servers, are consolidated at a single physical site while all requests for web-based information are directed thereto. The redirection of requests is enabled largely via a layered mode of addressing including: human-readable web addressing, and network node addressing. Human-readable web addressing includes human readable strings which have a specification structure easily understandable by users, for example, www.webservice.com. Domain Name Services (DNS) provide the necessary translation between human-readable web addressing and network node addressing. In particular DNS technology is used in redirecting region specific requests to the a single network node address of a central web server enabling the co-location of multiple region specific application servers.

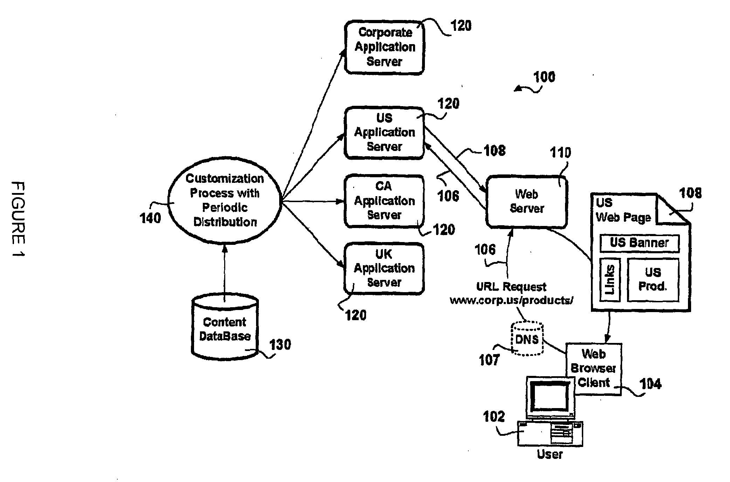

In accordance with a first prior art solution schematically presented in FIG. 1, web content relevant to a provisioned web enabled service is consolidated and stored off-line in a content database 130. The web content is customized, via an off-line customization process 140 - typically a manual customization process, - for each one of a group of regional application servers 120. An additional application web server 120 may be provided with web service generic/ global web content. Pre-customized web-content presentations are distributed as required to keep the application servers 120 up-to-date. The web content, in the form of pre-customized web pages 108, is served to users 102 of the exemplary web service from the application servers 120 dependent on which application web server 120 the information was requested 106 from. Note the processing of URL requests 106 through the DNS service 107.

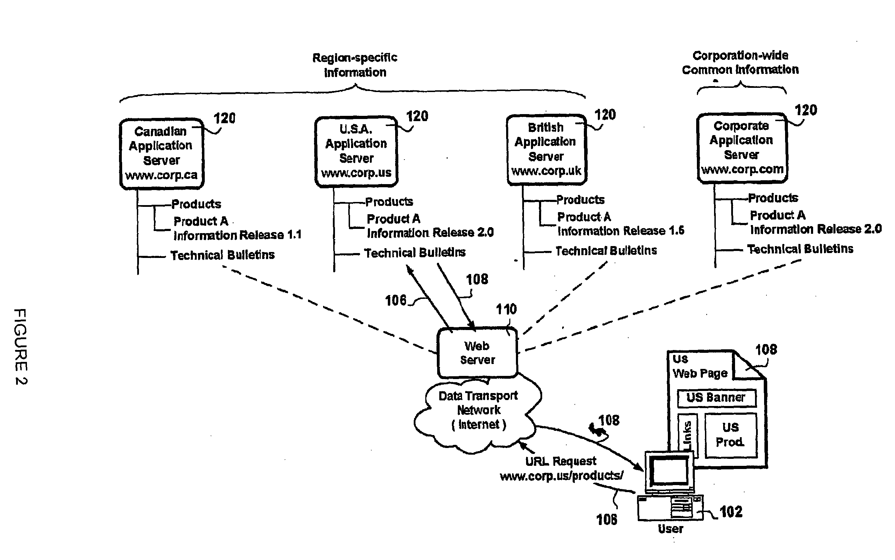

FIG. 2 shows in more detail how the pre-customized web content is stored in the application servers 120 each holding regionalized information, and common corporate/web service related information, respectively. A duplication of exemplary technical bulletins and exemplary product portfolio information in the different repositories is noted for an exemplary technical documentation dissemination web service.

For example, an end user 102 makes a request for information via a human readable URL specification such "www.corp.us/products" entered in a URL field of an associated client browser 104 (see FIG. 1). In this case, the "www.corp.us" portion of the URL string represents the human readable web address of the exemplary web service in the United States, and the "/products" part represents an application level request for the product portfolio available. A URL request 106 is issued into a data transport network (not shown) interconnecting the user 102 and the web service 100. Various request forwarding processes parse the human readable request and recognize the "www.corp.us" part thereof as a human-readable web addresses associated with the web enabled service 100. Multiple human-readable web addressees such as www.corp.us, www.corp.ca, www.corp.uk, www.corp.com, etc. are translated by the DNS service 107 into corresponding network node addresses. In support of the central provisioning implementation of the web service, each of the above mentioned human readable web addresses are translated into a single network address corresponding to a central web server 110. The URL requests 106 are conveyed to the central web server 110 using of the network address of the central web server 110 provided by the DNS service 107.

Each URL request 106, once received by the central web server 110, is further examined and forwarded to an application server 120 based on the human readable web address identified in the URL request 106 - in this case, "corp.us" selects the US application server 120.

The US application server 120 processes the received URL request 106 by parsing the remaining portion of the human readable information request "/products" and returns a particular pre-customized list of products web page 108 to the client browser 104. The web page 108 typically has a pre-customized regionalized banner, region specific news, and links that pertain to the US region. Co-location of the application servers 120 is hidden to the user 102 by employing the DNS service 107 which redirects all URL requests 106 for the web service to the web server 110.

Note the legacy correspondence between the "/products" portion of the URL string and the web page storage infrastructure of each one of the application servers 120. Web service provisioning is implemented such that the URL request portion after the human readable web address corresponds to a string specifying the location of the requested web content in a file/ directory structure. The URL string of the URL request 106remains visible in the web browser 104 window. Because the URL strings remain visible, they represent an important part of the image of a government/organization/corporate entity providing the subject web service. For this reason, URL strings, including the human readable web address portion of URL strings, are trade marked.

The presented solution does provide the expected look, feel, and content while suffering from high provisioning overheads associated with the maintenance of multiple application servers 120. This is an expensive solution due to the use of an application server 120 for each supported region. A reduction in the number of application servers 120 is sought.

This web service provisioning implementation has been seed to be disruptive to the user's browsing experience. It is difficult to ensure that the user 102 has access to the appropriate web content. For example, the user 102 may have accessed the Canadian regional application server 102 where a link to product information about products manufactured in Canada is available. However, it may be more desirable for the exemplary corporation to have the user 102 first access the "products" link on the corporate application server 120 so that information about all of the corporation's products may be presented.

The exemplary implementation further suffers due to the necessity of the distribution 140 of pre-customized content among the application servers 120 which usually leads to problems related to version control. It is desirable to avoid the use of large numbers of application servers 120, and to reduce the high content management and content distribution overheads.

Further web-content delivery infrastructure consolidation is achieved by serving multiple region-specific web sites from a single application server. The web content of the corporate web site, when present, may vary substantially from the region specific information. Such a deployment is not without problems, which relate to the separation of regional content for each regional web site from the content of the other regional web sites, and further to the separation of all regional content from the common/corporate content.

Solutions must address the storage of pre-customized content shared across all web sites of the service provided. Prior art approaches to solving these problems include placing the pre-customized web-content corresponding to each web site in its own file directory a common application server and the shared information in another file directory.

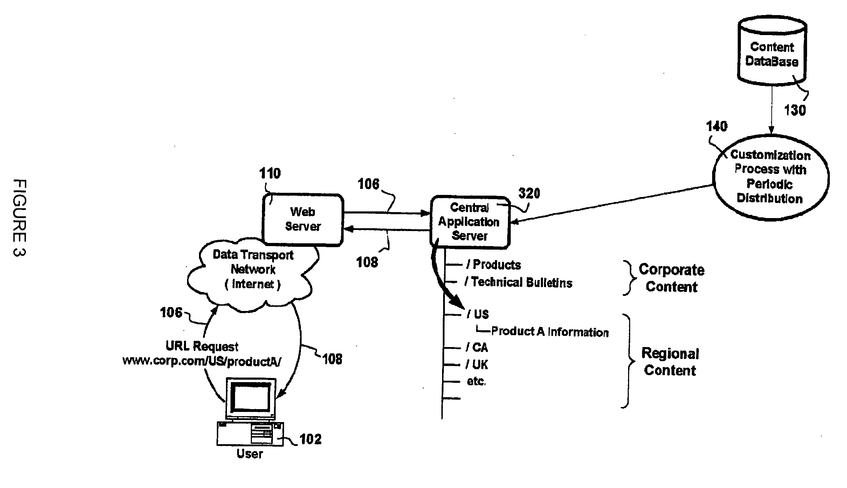

Referring to FIG. 3, an exemplary corporate enterprise has a central web server 110 for receiving URL requests 106 and a central application server 320 for handling URL requests 106. The central application server 320 stores pre-customized web content hierarchically including common corporate information and regional specific information, in respective file directories. A user 102 accessing this web server 110 using an web browser 104 (not shown,) is provided with content from a subdirectory specified in a URL string associated with a URL request 106.

As mentioned above, application servers, including the application server 320, search for web-content to be served starting from a single root directory. Storing regional web-content in different subdirectories exposes the users 102 to the intricacies of the file/directory structure used to store web-content. For example, in order to get the British homepage of the corporation, the users 102 would have to navigate to www.corp.com/UK/. This may not be desirable from a client, corporate, marketing, branding point-of-view.

Provisioning a web service in this manner has also been proven to be disruptive to the user's browsing experience. The visibility of the regional directory designation "/UK" following the ".com" name in a browser's URL field can have an adverse impact corporate image presented to the user 102. Regional companies want to present themselves to their customers as independent entities rather than regional divisions of global companies and users 102 expect the same. This negatively impacts on the corporate image of regional companies as has been verified in various studies.

It is noted that although the number of application servers 120 has been reduced to one central application server 320, the solution still suffers from a large operational overhead in performing the customization process 140. The web content still includes pre-customized web pages albeit stored in a hierarchical directory structure. Ensuring that all links to existing pre-customized web pages are updated during the (manual) execution of the customization process 140 is an error prone and time consuming task.

Efficient and effective presentation of web content to users 102 is critically important to provisioning web enabled services in a manner that consistent with the users' 102 expectations.

One object of the present invention is to provide a web content server allowing to deliver multi-domain web content in a centralized fashion at reduced operational overheads using a reduced infrastructure.

More precisely, the present invention provides a web content server comprising:
- a translator responsive to a received Universal Resource Locator (URL) request, the translator determining a web site relevant to the processing of the URL request; and
- a web content processor dynamically customizing web content in accordance with the determined web site relevant to the URL request;
the determination of the web site relevant to the URL request made by the translator enabling multi-domain web content provisioning from a single web content server.

Thus, according to the invention, the web site determination solve the problems of aggregating regional and common content on a single application server encountered in the prior art. In particular duplicate content is eliminated across the regional domains. A reduction in the distribution of web content to a single web-server / application server combination is achieved while maintaining consolidated management and provisioning of information for multiple regional domains. A reduction in the number of necessary application servers 120 is achieved without having to create custom pages for each site. It provides for the rendition of dynamic content retrieved in real time from a centralized content repository (database 130). Thus web content is available to all sites but delivered in a manner appropriate for the specific site (domain view) being viewed. The invention provides a cost savings to web service providers of region specific information. Use of such a solution improve the user's web browsing experience and thus to maintain their loyalty.

In accordance with another aspect of the invention, a method of serving web content in response to a received Universal Resource Locator (URL) request is provided. In accordance with the method, a web site relevant to the processing of the URL request is determined, and dynamically customized web content is serving in accordance with the web site determined. The run-time determination of the web site relevant to the URL request enables multi-domain web content provisioning from a single web content server.

The features and advantages of the invention will become more apparent from the following detailed description of the preferred embodiment(s) with reference to the attached diagrams wherein:
FIG. 1 is a schematic diagram showing cooperating entities implementing a web enabled service provisioning of regionalized web content in accordance with a first prior art solution;
FIG. 2 is a schematic diagram showing the storage of regionalized web content over a plurality of application servers in implementing the solution presented in FIG. 1;
FIG. 3 another schematic diagram showing, in accordance with another prior art implementation, cooperating entities implementing another web enabled service provisioning of regionalized pre-customized web-content using a single application server storing the pre-customized web-content in a hierarchical file/ directory structure;
FIG. 4 is a schematic diagram showing, in accordance with an exemplary embodiment of the invention, central provisioning of dynamically customized regionalized web content; and
FIG. 5 is a schematic diagram showing elements of and steps of an exemplary dynamic customization process of regionalized web content in accordance with an exemplary implementation of the invention.

It will be noted that in the attached diagrams like features bear similar labels.

The invention is directed to the problem of serving multiple domains from a single application server 420, while providing a customized presentation of web content for each regional domain. This problem is encountered by service providers looking to reduce costs associated with providing customized regional web sites. The ability to control the presentation of web content to users is critically important for efficient and effective provisioning of web services.

In delivering web content and services from a single network location is subject to several technical difficulties. One such difficulty is the delivery of different web content depending on which site is being accessed.

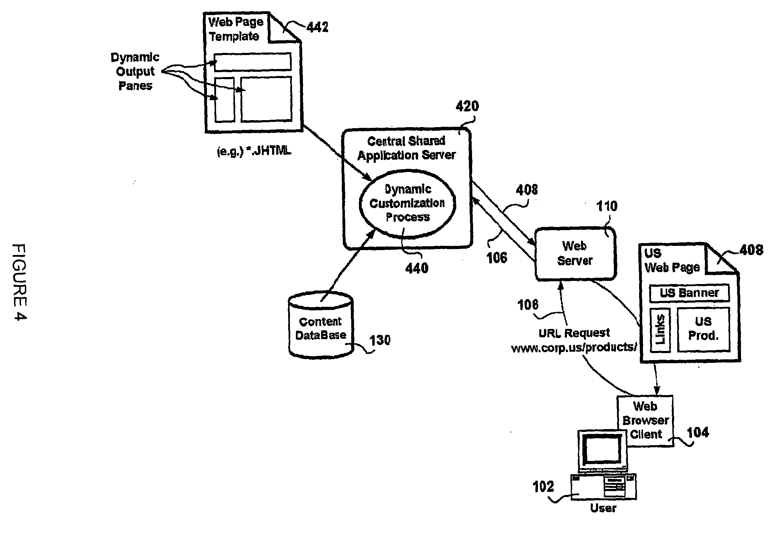

Referring to FIG. 4: in accordance with a preferred embodiment of the invention, the group of regional and corporate application servers 120 are replaced by a central shared application server 420. The shared application server 420 runs a dynamic customization process 440, which uses content from the database 130, one or more dynamic web page templates 442 (such as Java-HTML (JHTML), Java Server Page (JSP), etc.)¹, and a URL request 106 issued by a user 102, to create 440 a customized presentation of web content such as a web page 408 to be presented to the user 102. The resulting web page 408 is dynamically customized at run-time to be relevant to the user's URL request 106.
¹ JAVA is a trademark of Sun Microsystems

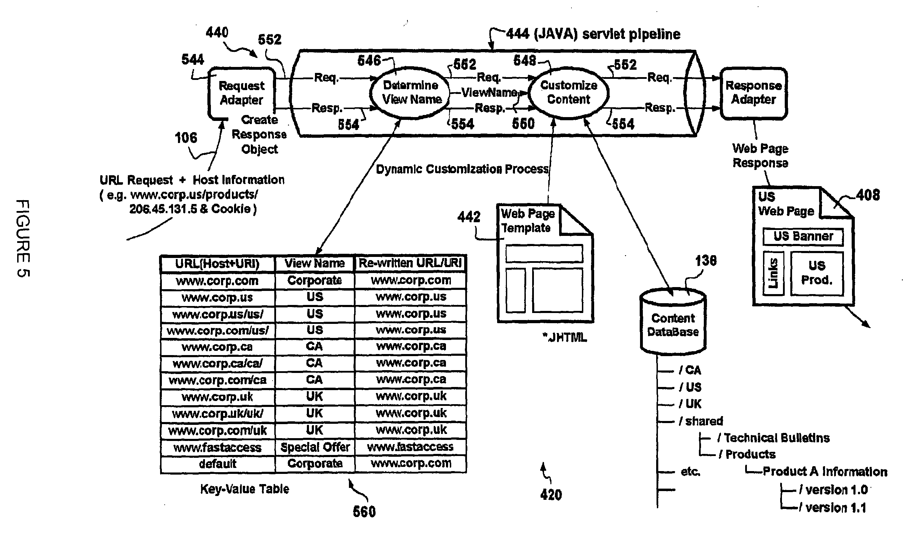

Referring to FIG. 5, the dynamic customization process 440 is implemented using an exemplary pipeline 440 of (JAVA™) servlets 544/546/548 running on the application server 420, in this implementation, also referred to as a servlet engine. Each one of the servlets 544/546/548 performs operations on, and in response to, session objects that correspond to a session created to process the user's URL request 106. Although only three servlets are shown, any number of servlets could be used in the pipeline 444. The application server 420 receives the URL request 106, which includes a URL string, and via a request adapter servlet 544, creates request 552 and response objects 554.

The request object 552 includes information held in the URL request 106 and in particular information included in the URL string: the human readable web address, and a Universal Resource Identifier (URI) such as the path where the information is to be found. The request object 552 may further hold information regarding the user 102 and/or the users' computer (host information) which may include the network address of the users' host computer and/or perhaps a cookie.

The servlet 546 accesses the information held in the request object 552 to determine a domain view name corresponding to specific regionalized content. The servlet 546 creates a domain view session object 550 containing the domain view name. The domain view session object 550 is forwarded along with the request 552 and the response 554 objects to other servlets in the pipeline 444. The domain view name specification is shown to be stored in the exemplary separate domain view object 550 for illustration purposes only without limiting the invention thereto. It is possible for the domain view name specification to be stored in the request object 552.

Servlet 548 in the pipeline 444 uses the information stored in the domain view object 550 including the domain view name to customize the presentation of web content to the user 102.

Although the servlet 546 responsible for determining the correct domain view is shown as the second servlet in the servlet pipeline 444, it may occur anywhere prior to any other servlet attempting to use the domain view name.

In performing its function servlet 546 may access a key-value table 560 using the URL string, host information and/ or cookie information in order to determine the domain view name. View names correspond to each regional domain, and others may be created to meet any of a number of business needs, such as current marketing campaigns and others. A default view name is also provided for handling exception conditions.

The servlet 548 uses a web page template 542 to create a customized presentation of content from the database 130 according to the view name specified in the domain view object 550. The servlet 548 populates the response object 554 with the customized presentation, which is returned to the user 102, normally in the form of an HTML page 408.

In accordance with another embodiment of the invention, it is recognized that there is a file/directory structure visible to the user 102 via the web browser 104 - the URI - that preserves the web content storage structure used before the consolidation of the application servers 120 into the central server 420; and another web content storage structure of the web content repository - the database 130. An automated process is provided to dynamically handle the mapping between the visible file/directory structure (URI) and the web content storage structure of the repository database 130. The automated process is preferably transparent to users 102 and also easily manageable by web designers. Such an arrangement enables the consolidation of application servers 120 into a central application server 420 with minimal disruptions to the migrated web sites.

Accordingly web content from a global corporate collection of information is provided to a user 102 based on certain, customizable rules held in the key-value table 560. The rules are used to re-write URI paths to dynamically create a regionalized presentation of the information consistent with a user's information query. In effect, the present solution applies router concepts to URI paths in order to hide the storage structure of a central web content repository (the database 130) from the user 102.

In accordance with another exemplary embodiment of the invention, the servlet 546 acts as a URI switch providing automated mapping of URI strings to the organization of web-content stored in the content database 130 associated with the application server 420.

The translation of the URI to web content stored in the web content database 130, is enabled by a many-to-one relationship defined by the URI switching rules. As an example, using the URI switch servlet 546, the "/products" content associated with the Canadian regional web site (www.corp.ca/products/) can be shared with the "/products" content of the corporate web site (www.corp.com/dotcom/products/.) This is exemplary achieved by mapping www.corp.ca/products web location, to a www.corp.com/dotcom/products/file directory. Thus the physical location of the web content in the application server's document root directory is shared among multiple URLs and therefore among multiple corresponding web sites. The key value table 560 used by the servlet 546 shows other mappings solving corporate image problems encountered in the prior art.

The URI switch servlet 546 makes use of the key-value table 560 which may be populated via switching rules which determine how an individual URI is mapped. The rules contain one or more URIs, the web address, and path components and the modification that is required to the URI. The mapping enables the application server 420 to correctly locate the requested web content in the web content repository (database 130). The rules include a mandatory rule: the "default" rule that is to be applied if no other rule is relevant to a URL request 106.

The rules may be stored off-line in and loaded at start-up from rule files including Extensible Markup Language (XML) files but the invention is not limited thereto. The rule files are customizable reducing the management of the web content to editing the rule files.

In the above description the consolidation of information regarding a product portfolio and technical bulletins was presented, the invention is not limited thereto. Similar concepts regarding URI switching and/or the determination of a domain view also applies to electronically serving users region specific license agreements, terms of use agreements, etc.

Furthermore, version control of the available information is also effected through use of the key-value table 560 for both of the above mentioned implementations. Either versions of the same content are associated with domain views, or in performing URI switching, corresponding rules define which version of the presented content should be delivered.

The URI switch and/or domain view determinator (servlet 546) solve the problems of aggregating regional and common content on a single application server encountered in the prior art. In particular duplicate content is eliminated across the regional domains. A reduction in the distribution of web content to a single web-server / application server combination is achieved while maintaining consolidated management and provisioning of information for multiple regional domains. A reduction in the number of necessary application servers 120 is achieved without having to create custom pages for each site. It provides for the rendition of dynamic content retrieved in real-time from a centralized content repository (database 130). Thus web content is available to all sites but delivered in a manner appropriate for each specific site (domain view) being viewed. The methods described herein provide a cost savings to web service providers of region specific information. Use of the methods described herein improve the user's web browsing experience and thus to maintain their loyalty.

By providing a means for easily and flexibly creating web sites, the invention enables business internet demands to be met rapidly for specialized content presentation, for example to support current marketing campaigns, or locale view for the presentation of regional content.

The embodiments presented are exemplary only and persons skilled in the art would appreciate that variations to the above described embodiments may be made without departing from the spirit of the invention. The scope of the invention is solely defined by the appended claims.

## Claims

1. Web content server comprising:
a. a translator responsive to a received Universal Resource Locator (URL) request, the translator determining a web site relevant to the processing of the URL request; and
b. a web content processor dynamically customizing web content in accordance with the determined web site relevant to the URL request;
the determination of the web site relevant to the URL request made by the translator enabling multi-domain web content provisioning from a single web content server.

2. Web content server as claimed in claim 1, the web content server further comprises an application server.

3. Web content server as claimed in claim 1 or claim 2, the web content server further comprising a servlet engine.

4. Web content server as claimed in any one of claims 1 to 3, wherein the translator comprises a Universal Resource Identifier (URI) switch.

5. Web content server as claimed in any one of claims 1 to 4, wherein the determined web site further comprises a re-written URL request specification.

6. Web content server as claimed in any one of claims 1 to 5, wherein the translator comprises a domain view determinator.

7. Web content server as claimed in any one of claims 1 to 6, wherein the determined web site further comprises a domain view specification.

8. Web content server as claimed in any one of claims 1 to 7, the translator further accessing a group of rules in determining the web site relevant to the processing of the URL request.

9. Web content server as claimed in claim 8, where the group of rules comprises customizable rules.

10. Web content server as claimed in claim 8 or claim 9, where the group of rules comprises a lookup table codifying the group of rules.

11. Web content server as claimed in any one of claims 1 to 10, the web content server further having access to at least one web page template used in customizing the presentation of web content in accordance with the determined web site.

12. Web content server as claimed in any one of claims 1 to 11, the web content server further having access to a web content repository from which web content is retrieved based on the determined web site.

13. Web content server as claimed in any one of claims 1 to 11, the web content server further having access to a web content repository from which web content is retrieved based on one of the URL request and a modified URL request.

14. Method of serving web content in response to a received Universal Resource Locator (URL) request comprising steps of:
a. determining a web site relevant to the processing of the URL request; and
b. serving dynamically customized web content in accordance with the determined web site the run-time determination of the web site relevant to the URL request enables multi-domain web content provisioning from a single web content server.

15. Method of serving web content as claimed in claim 14, wherein determining the web site relevant to the URL request further comprises a step of: applying at least one rule of a group of rules to determine the relevant web site.

16. Method of serving web content as claimed in claim 14 or claim 15, wherein determining the relevant web site, the method further comprises a step of: specifying a domain view.

17. Method of serving web content as claimed in any one of claims 14 to 16, wherein determining the relevant web site, the method further comprises a step of: re-writing the specification of the URL request.

18. Method of serving web content as claimed in claim 17, wherein determining the relevant web site, the method further comprises a step of: re-writing a URI portion of the specification of the URL request.

19. Method of serving web content as claimed in any one of claims 14 to 18, wherein prior to serving dynamically customized web content, the method further comprises steps of:
a. retrieving a web page template;
b. retrieving web content in accordance with the determined web site; and
c. generating a web page by populating the retrieved web page template with the retrieved web content.

20. Method of serving web content as claimed in claim 19, wherein retrieving the web page template, the method further comprises a step of: retrieving the web page template from a plurality of web page templates in accordance with the web site determination.
